# NOUVEAU FASCICULE DE BREVET EUROPEEN

(11) **EP 1 288 031 B2**
(45) Date de publication et mention de la décision concernant l'opposition: **26.11.2014**
(45) Mention de la délivrance du brevet: 09.04.2008
(21) Numéro de dépôt: 02017462.9
(22) Date de dépôt: 05.08.2002
(51) Int. Cl.: B60H 1/00

(54) **Dispositif de génération d'un flux d'air à température réglée pour l'habitacle d'un véhicule automobile et appareil de chauffage et/ou de climatisation comportant ce dispositif**
Vorrichtung zur Erzeugung einer temperaturgeregelten Luftströmung für einen Kraftfahrzeugfahrgastraum und Heizungs- und/oder Klimaanlage mit einer solchen Sicherungsvorrichtung
Device for generating a temperature controlled air flow for the passenger compartment of a motor vehicle and heating and/or air conditioning apparatus with such a device

(30) Priorité: 30.08.2001 FR 0111270
(43) Date de publication de la demande: 05.03.2003
(73) Titulaire: VALEO SYSTEMES THERMIQUES, 78320 Le Mesnil Saint-Denis (FR)
(72) Inventeur: Vincent, Philippe, 28230 Epernon (FR)

(56) Documents cités:
- DE-A- 19 919 132
- FR-A- 2 724 873
- FR-A- 2 805 217
- US-A- 4 582 252
- US-A- 5 016 704
- US-A- 5 988 263
- US-A1- 2001 008 183

## Description

L'invention se rapporte au domaine des appareils de ventilation, de chauffage et/ou de climatisation de l'habitacle d'un véhicule automobile.

Plus précisément, l'invention concerne un dispositif de génération d'un flux d'air à température réglée pour alimenter en air à température réglée une ou plusieurs zones de l'habitacle d'un véhicule automobile, ce dispositif comprenant des moyens de répartition d'un flux d'air principal pour répartir en proportions réglables ce flux d'air en un flux d'air secondaire froid et un flux d'air secondaire à chauffer, et des moyens de chauffage pour chauffer le flux d'air secondaire à chauffer afin de produire un flux d'air secondaire chaud.

Elle concerne également un appareil de chauffage et/ou de climatisation de l'habitacle d'un véhicule automobile comportant ce dispositif de génération d'air à température réglée.

Un tel dispositif est connu du document FR 2 805 217.

Le document US 4,582,252, considéré comme l'art antérieur le plus proche, décrit une unité de chauffage formant un module d'un appareil de ventilation, de chauffage et/ou de climatisation comprenant un échangeur de chaleur et un volet de mixage d'air apte à répartir le flux d'air vers l'échangeur de chaleur et/ou vers un passage de contournement dudit échangeur de chaleur.

Le document FR 2 724 873 décrit une unité de chauffage pour un climatiseur de véhicule automobile comprenant une structure dans laquelle un aérotherme est placé. Cette structure comprend une pluralité de cloisons scindant sa section interne en une pluralité de veines affectées alternativement au passage de fraction de l'air traversant l'aérotherme et au passage de fraction de l'air court-circuitant l'aérotherme.

Afin de réduire les coûts de développement et de production des véhicules automobiles, les constructeurs développent de plus en plus la standardisation de leurs gammes. Pour conserver une diversification de la gamme de leurs véhicules, ils varient les niveaux d'option et de fonctionnalité des équipements de ces véhicules. Cette politique de standardisation concerne notamment les appareils de chauffage et/ou de climatisation.

Ces appareils comprennent un boîtier qui délimite un passage d'air principal dans lequel circule un flux d'air principal. Cet air est aspiré à l'extérieur du véhicule (éventuellement à l'intérieur de l'habitacle du véhicule). Il est mis en circulation par un pulseur. Dans la plupart des cas, et de plus en plus souvent, l'appareil de chauffage est équipé d'un climatiseur d'air. La totalité du flux d'air principal traverse l'évaporateur du circuit de climatisation, ce qui permet avantageusement de le déshumidifier. Toutefois, les appareils de chauffage d'entrée de gamme ne comportent pas de dispositif de climatisation, de telle sorte que le flux d'air est à la température extérieure ambiante.

Le passage d'air principal de l'appareil de chauffage et/ou de climatisation se divise en un conduit d'air froid et un conduit d'air chaud dans lequel est installé un radiateur de chauffage. Un moyen tel qu'un volet, couramment appelé "volet de mixage", permet soit d'obturer le conduit d'air froid de manière que la totalité du flux d'air principal traverse le radiateur de chauffage ("mode chaud"), soit d'obturer le conduit d'air chaud ("mode froid"), soit encore de répartir en proportions variables le flux d'air principal entre le conduit d'air froid et le conduit d'air chaud. En aval du conduit d'air froid et du conduit d'air chaud, dans le sens de l'écoulement du flux d'air, on trouve un volume, appelé chambre de mixage, dans lequel les flux froid et chaud se remélangent. Ainsi, le volet de mixage ou, plus généralement, le dispositif de mixage, permet de régler la température du flux d'air qui sort de l'appareil entre une température minimale (température du flux d'air froid) et une température maximale (température du flux d'air chaud).

Des conduits de sortie d'air permettent d'amener le flux d'air à température réglée en divers endroits de l'habitacle du véhicule. L'appareil peut comporter trois sorties (dégivrage du pare-brise, aérateur de planche de bord et chauffage pieds). Il peut également comporter une quatrième sortie qui amène l'air aux places arrière du véhicule. Des volets de diffusion, disposés dans les conduites de sortie, permettent de régler le débit de l'air qui traverse ces conduites. Il existe différentes versions de l'appareil de chauffage et/ou de climatisation. Les véhicules d'entrée de gamme sont équipés d'un appareil de chauffage et/ou de climatisation de type mono-zone. Dans une première variante, l'air qui alimente l'habitacle est réparti dans l'ensemble de l'habitacle qui ne forme qu'un volume unique. Il n'y a pas de possibilité de réglage séparé de la diffusion de l'air, ni a fortiori de réglage de la température pour des zones différentes de l'habitacle du véhicule. Dans une variante plus élaborée, les appareils de chauffage et/ou de climatisation mono-zone permettent le réglage de la diffusion de l'air selon les différentes zones, mais la température de l'air est la même pour chacune de ces zones. En d'autres termes, il n'existe pas de possibilité de réglage séparé de la température de l'air pour les différentes zones.

Les véhicules qui comportent un niveau d'équipement supérieur sont équipés d'un appareil de chauffage et/ou de climatisation pluri-zones, par exemple bi-zones ou tri-zones. Dans ces appareils, il est possible de régler non seulement la quantité d'air délivrée dans chacune des zones, mais également la température de cet air de manière indépendante d'une zone à l'autre. Dans un appareil de type bi-zones, l'habitacle du véhicule est divisé en une zone gauche et une zone droite. Il est possible de régler indépendamment la diffusion de l'air dans la zone gauche et dans la zone droite, mais également sa température. Dans un véhicule équipé d'un appareil de chauffage tri-zones, l'habitacle du véhicule est divisé en une zone avant gauche, une zone avant droite et une zone arrière. Il est possible de régler indépendamment la diffusion et la température de l'air dans chacune de ces zones. On pourrait concevoir également un appareil de chauffage de type quadri-zones dans lequel il serait possible de régler indépendamment la température et la diffusion de l'air aux places arrière gauche et droite.

Cette gestion de différents niveaux de confort requiert une conception différente de l'appareil selon le niveau de confort à satisfaire. Par exemple, la réalisation d'un appareil de chauffage et/ou de climatisation tri-zones nécessite de cloisonner les flux d'air chaud et froid en trois circuits indépendants et nécessite une mise au point aérothermique différente de celle d'une version mono-zone ou bi-zones. En conséquence, la définition interne des appareils de chauffage doit être adaptée. Elle varie selon les différentes versions de l'appareil. Il en résulte de nombreux inconvénients. Il est nécessaire de gérer des outillages différents pour fabriquer les différentes versions. Cette gestion est complexe. Elle pose des problèmes de logistique et génère des coûts élevés. Par ailleurs, elle implique des risques d'erreur (erreur de version, oubli de certaines pièces, etc.). Certaines variantes d'appareils à réaliser peuvent aussi nécessiter des formes plus complexes afin, notamment, de pouvoir démouler toutes les formes utiles. Ces formes complexes ne sont pas nécessaires pour toutes les versions de l'appareil. Le coût des versions plus simples est donc augmenté inutilement.

Le processus d'assemblage de l'appareil doit être également conçu pour satisfaire toutes les variantes d'appareil sans générer d'erreur d'assemblage ou de version. La logistique d'approvisionnement des composants est donc complexe.

La présente invention a par conséquent pour objet un appareil de chauffage et/ou de climatisation tel que revendiqué qui remédie aux inconvénients énumérés ci-dessus.

Elle simplifie les problèmes de fabrication et d'assemblage de versions d'un appareil de chauffage et/ou climatisation adapté à des niveaux d'équipement différents d'un véhicule automobile et, en particulier, à des versions permettant de délivrer un flux d'air à température réglée dans une ou plusieurs zones de confort de l'habitacle d'un véhicule automobile.

Ces buts sont atteints, conformément à l'invention, par le fait que le dispositif comprend un cadre de support scindé en deux parties par une plaque de partition qui divise le cadre de support en un tunnel d'air chaud et un tunnel d'air froid.

Grâce à ces caractéristiques, la définition interne des boîtiers est sensiblement identique quelle que soit la version de l'appareil de chauffage. La gestion des outillages et les problèmes de logistique sont simplifiés. Les risques d'erreur sont diminués.

Le processus d'assemblage est également simplifié. Lors de l'assemblage de l'appareil, l'opérateur n'a qu'à sélectionner le module de mixage préalablement assemblé et correspondant à la variante à fabriquer. Dans une variante de réalisation préférée, ladite plaque de partition est rapportée ou intégrée dans le cadre support, le cadre support pouvant, selon la version de l'appareil auquel il est destiné, ne comporter aucune division des tunnels d'air chaud et d'air froid, ou être divisé par au moins une cloison de zone en au moins deux paires de conduits, chaque paire de conduits étant constituée par un conduit d'air chaud et un conduit d'air froid, chaque paire de conduits comportant des moyens de répartition indépendants pour répartir une partie du flux d'air principal en proportions réglables entre son conduit d'air chaud et son conduit d'air froid.

De préférence, le dispositif comporte des aménagements de mise au point aérothermique pour orienter au moins le flux d'air secondaire chaud vers des régions préférées d'un volume interne du boîtier de l'appareil de climatisation. Ces aménagements de mise au point aérothermique peuvent comprendre, par exemple, des aménagements de déflexion d'air et/ou au moins une nervure de guidage ou de mélange d'air.

Dans une réalisation particulière, les aménagements de déflexion comprennent au moins un déflecteur montant pour orienter une partie du flux d'air chaud vers la partie supérieure du volume du boîtier interne, au moins un déflecteur descendant pour orienter une partie du flux d'air chaud vers la partie inférieure du volume interne du boîtier, et au moins un déflecteur montant pour orienter au moins une partie du flux d'air froid vers la partie supérieure du même volume interne du boîtier.

Dans une réalisation particulière destinée à un appareil de chauffage bi-zones, le dispositif comporte une cloison de zone centrale divisant le tunnel d'air chaud en un conduit d'air chaud gauche et un conduit d'air chaud droit, et le tunnel d'air froid en un conduit d'air froid gauche et un conduit d'air froid droit, et des aménagements de déflexion comprenant une cloison centrale prévue pour diviser le volume interne du boîtier en une chambre de mixage gauche et une chambre de mixage droite après montage du dispositif dans un appareil de chauffage, au moins un déflecteur montant et au moins un déflecteur descendant dans la chambre de mixage gauche, au moins un déflecteur montant et au moins un déflecteur descendant dans la chambre de mixage droite, et au moins un déflecteur montant dans le tunnel d'air froid.

Dans une autre variante de réalisation particulière destinée à un appareil de chauffage tri-zones, le dispositif comprend deux cloisons de zone divisant le tunnel d'air chaud en trois conduits d'air chaud et le tunnel d'air froid en trois conduits d'air froid, et des aménagements de déflexion comprenant une cloison centrale prévue pour diviser le volume interne du boîtier en une chambre de mixage gauche et une chambre de mixage droite après montage du dispositif dans un appareil de chauffage, au moins un déflecteur dans la chambre de mixage gauche, et au moins un déflecteur dans la chambre de mixage droite, et une boîte délimitant un volume de mixage qui s'adapte sur l'une des paires de conduits d'air chaud et froid du cadre de support, la boîte comportant une première sortie d'air destinée, après montage du dispositif dans un appareil de chauffage, à être placée en regard d'une sortie d'air du boîtier de l'appareil de chauffage et/ou de climatisation pour amener l'air aux places arrière du véhicule.

La boîte peut comporter une seconde sortie d'air destinée, après montage du dispositif dans un appareil de chauffage, à amener l'air aux places avant droit et gauche du véhicule, un volet orientable permettant d'obturer la première sortie ou la seconde sortie selon le mode de distribution d'air choisi, par exemple le mode de dégivrage.

Des caractéristiques optionnelles ou complémentaires de l'invention sont énoncées ci-après :
- le cadre support comporte des moyens de raccordement au boîtier de l'appareil de chauffage et/ou de climatisation permettant de solidariser le module au boîtier avec étanchéité à l'air ;
- les moyens de raccordement sont constitués par une nervure périphérique formée sur le cadre support et prévue pour s'engager dans une rainure correspondante du boîtier de l'appareil de chauffage et/ou de climatisation après montage du dispositif dans l'appareil de chauffage, ou inversement ;
- les moyens de raccordement sont constitués par une gorge périphérique formée sur le cadre support et prévue pour recevoir un cordon d'emboîtement correspondant, formé dans une paroi interne du boîtier de l'appareil de chauffage et/ou de climatisation ;
- les moyens de raccordement sont constitués par deux collerettes espacées formées sur une paroi périphérique extérieure du cadre de support et s'engageant entre deux collerettes plus espacées formées sur une paroi périphérique intérieure du boîtier de l'appareil de chauffage et/ou de climatisation, avec possibilité d'insérer un joint ;
- les moyens de raccordement sont constitués par deux joints à lèvres surmoulées formés sur une paroi périphérique extérieure du cadre de support, les joints retenant entre eux une nervure formée sur une paroi périphérique interne du boîtier de l'appareil de chauffage et/ou de climatisation ;
- les moyens de répartition sont constitués par au moins un panneau comportant une pluralité d'ajours, et une plaque obturatrice comportant une pluralité d'ouvertures, la plaque obturatrice étant mobile entre une position d'ouverture dans laquelle elle ne recouvre pas les ajours du panneau et une position d'obturation dans laquelle elle obture les ajours du panneau, au moins un volet de réglage de la section de passage du conduit d'air froid mobile entre une position d'ouverture et une position d'obturation, et un mécanisme de commande pour commander de manière synchronisée le déplacement de la plaque obturatrice et le déplacement du volet de réglage de la section de passage du conduit d'air froid entre leur position d'ouverture et leur position d'obturation ;
- les moyens de répartition sont constitués par au moins un volet rotatif disposé dans le conduit d'air froid, et au moins un volet rotatif disposé dans le conduit d'air chaud.

D'autres caractéristiques et avantages de la présente invention apparaîtront encore à la lecture de la description qui suit d'exemples de réalisation donnés à titre illustratif en référence aux figures annexées. Sur ces figures :
- la Figure 1 est une vue générale en coupe d'un appareil de chauffage et/ou de climatisation mono-zone ou bi-zones comportant un dispositif modulaire de génération d'un flux d'air à température réglée conforme à la présente invention ;
- la Figure 2 est une vue en perspective des aménagements de déflexion du dispositif représenté sur la Figure 1, pour un appareil mono-zone ;
- la Figure 3 est une vue en perspective d'une variante de réalisation des aménagements de déflexion de la Figure 1, pour un appareil bi-zone ;
- la Figure 4 est une vue générale en coupe d'un appareil de chauffage et/ou de climatisation tri-zone comportant un dispositif modulaire de génération d'un flux d'air conforme à la présente invention ;
- la Figure 5 est une vue en perspective des aménagements de déflexion du dispositif représenté sur la Figure 4 ;
- la Figure 6 est une vue en coupe d'un appareil de chauffage et/ou de climatisation mono-zone comportant une variante d'entrée de gamme du dispositif modulaire représenté sur les Figures 1 et 2 ;
- les Figures 7 à 10 sont des vues de détail qui représentent des moyens de raccordement étanches à l'air du dispositif modulaire de l'invention au boîtier d'un appareil de chauffage et/ou de climatisation.

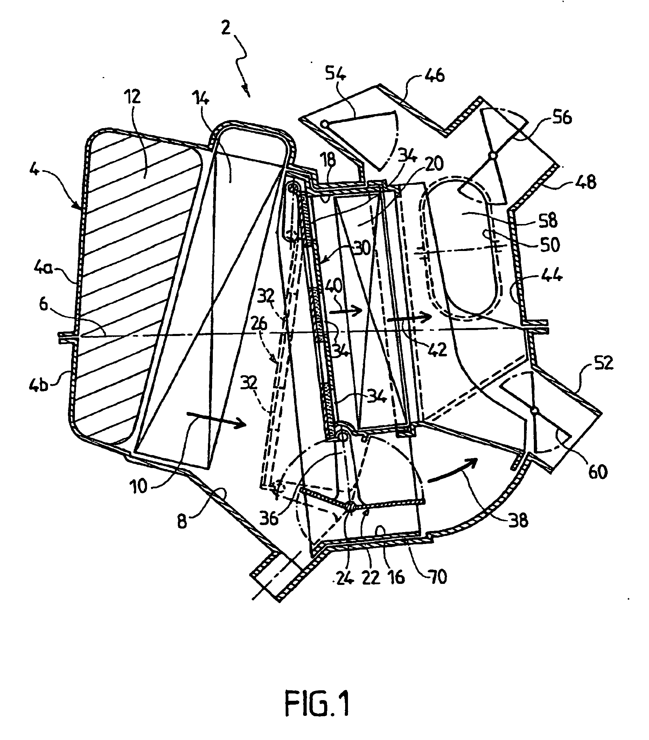

Sur la Figure 1, l'appareil de chauffage et/ou de climatisation de l'habitacle d'un véhicule désigné par la référence générale 2 comporte un boîtier désigné par la référence générale 4 constitué d'une partie supérieure 4a et d'une partie inférieure 4b qui se raccordent selon un plan de joint 6 représenté en traits mixtes. Le boîtier 4 délimite un passage principal 8 pour un flux d'air principal 10 qui pénètre dans le boîtier par une arrivée d'air 12. Un évaporateur 14 faisant partie d'un circuit de climatisation (non représenté) est monté dans le passage principal 8 de telle sorte qu'il est traversé par la totalité du flux d'air 10. Ceci présente l'avantage de le déshumidifier. Le passage principal 8 se scinde en un conduit d'air froid 16 situé à la partie inférieure du boîtier et un conduit d'air chaud 18 situé à la partie supérieure du boîtier. Un radiateur de chauffage 20 est monté dans le conduit d'air chaud 18.

Des moyens de répartition sont prévus pour répartir le flux d'air principal 10 entre le conduit d'air froid 16 et le conduit d'air chaud 18. Dans l'exemple représenté, ces moyens sont constitués de deux éléments distincts, à savoir un volet papillon 22 monté pivotant autour d'un axe 24 et une plaque obturatrice 26. Le volet pivotant 22 peut pivoter entre une position ouverte, représentée en traits pleins sur la figure, dans laquelle le conduit d'air froid 16 est ouvert, et une position fermée, représentée en traits pointillés, dans laquelle le volet d'air froid 22 obture entièrement le conduit 16. La plaque obturatrice 26 est mobile selon un mouvement combiné de translation et de rotation entre une position ouverte, représentée en traits pointillés sur la figure, dans laquelle elle est écartée d'un panneau ajouré fixe 30 monté à l'entrée du conduit d'air chaud 18 et une position fermée dans laquelle elle est appliquée contre le panneau ajouré 30. La plaque obturatrice 26 comporte une série d'ouvertures 32 réparties sur sa longueur. De manière similaire, le panneau 30 comporte des ajours 34 répartis sur sa longueur. Les ouvertures de la plaque 26 et les ajours 34 du panneau 30 sont décalés de telle sorte que, lorsque la plaque obturatrice 26 est appliquée contre le panneau 30, le conduit d'air chaud 18 est entièrement obturé.

Le mouvement de la plaque obturatrice est commandé par celui du volet d'air froid 22. A cet effet, l'extrémité inférieure de la plaque obturatrice est reliée à un bras 36 du volet d'air froid 22. Ainsi, une commande unique permet de commander le déplacement des deux éléments de répartition du flux d'air principal 10 entre le conduit froid 16 et le conduit chaud 18. Le flux d'air principal 10 se divise en un flux secondaire 38 froid qui traverse le conduit 16 et un flux secondaire 40, également froid, qui pénètre dans le conduit d'air chaud 18. L'air froid 40 s'échauffe en traversant le radiateur de chauffage 20 et un flux d'air secondaire échauffé 42 ressort du conduit d'air chaud 18. Le flux froid 38 et le flux chauffé 42 se remélangent dans un volume interne du boîtier 4 de l'appareil de chauffage et/ou de climatisation 2 appelé chambre de mixage 44.

Le boîtier 4 comporte quatre sorties d'air reliées à la chambre de mixage 44, à savoir respectivement une sortie 46 de dégivrage/désembuage du pare-brise, une sortie 48 d'aérateurs de planche de bord et une sortie 50 de chauffe-pieds. Une sortie 52 située à la partie inférieure de la chambre de mixage 44 permet d'alimenter en air à température réglée les places arrière de l'habitacle du véhicule. La diffusion de l'air circulant par ces différentes sorties peut être réglée au moyen de volets de réglage désignés respectivement par les références 54, 56, 58 et 60.

L'appareil de chauffage et de climatisation 2 représenté sur la Figure 1 est de type mono-zone. Il est possible de régler séparément la diffusion de l'air circulant au travers de chacune des sorties 46, 48, 50 et 52, mais il n'existe qu'un seul réglage de la température de cet air pour l'appareil. En d'autres termes, la température de l'air est la même quel que soit l'endroit où il est délivré dans l'habitacle du véhicule automobile.

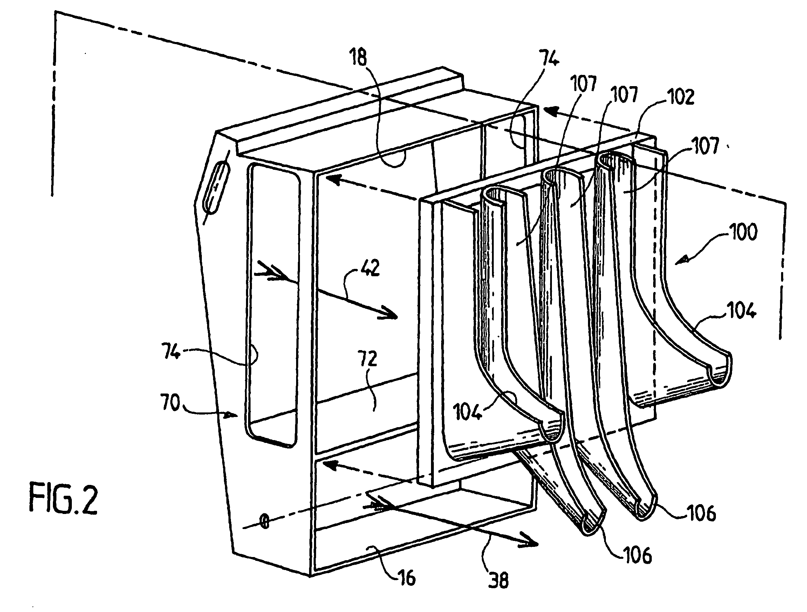

Dans la réalisation particulière représentée à la Figure 1, le dispositif de génération d'un flux d'air à température réglée de l'invention comporte un cadre 70 qui s'adapte exactement à la surface périphérique interne du boîtier 4. La liaison entre le cadre 70 et le boîtier est étanche à l'air. Les moyens qui permettent d'assurer cette étanchéité seront décrits plus en détail ultérieurement. Le cadre de support 70 est scindé en deux parties, dans le sens de sa hauteur, par une plaque de partition 72 horizontale (voir Figure 2) qui divise le volume intérieur du cadre en un tunnel d'air chaud et un tunnel d'air froid. Etant donné que l'appareil de chauffage 2 représenté sur la Figure 1 est de type mono-zone, il ne comporte aucune autre division intérieure que la division effectuée par la plaque de partition 72. Dans ces conditions, le tunnel d'air froid coïncide avec le conduit d'air froid 16 et le tunnel d'air chaud coïncide avec le conduit d'air chaud 18.

On a représenté sur la Figure 2 une vue en perspective du cadre de support 70 ainsi que des aménagements de déflexion 100 correspondant à la variante mono-zone du dispositif de génération d'un flux d'air à température réglée de la Figure 1. On notera la présence, à l'intérieur du cadre 70, de la plaque de partition 72 qui divise le volume intérieur du cadre en un conduit d'air froid 16 situé à sa partie inférieure et un conduit d'air chaud 18 situé à sa partie supérieure. On notera également que les parois verticales du cadre 70 sont percées d'ouvertures verticales rectangulaires allongées 74 qui permettent l'introduction du radiateur de chauffage (non représenté sur la Figure 2).

Les aménagements de déflexion d'air comprennent un cadre 102 qui s'adapte exactement à la section du conduit d'air chaud 18. Un déflecteur montant 104 est aménagé à la partie gauche du cadre 102 et un autre déflecteur montant 104 identique au premier est aménagé à la partie droite du cadre 102. Deux déflecteurs descendants 106 sont aménagés entre les deux déflecteurs 104. Comme leur nom l'indique, les deux déflecteurs montants 104 sont destinés à dévier le flux d'air chaud 42 vers la partie haute de la chambre de mixage 44 afin d'alimenter en air les sorties 46, 48 et 50. Au contraire, les deux déflecteurs descendants 106 sont destinés à diriger vers la partie inférieure de la chambre de mixage 44 une partie du flux secondaire chaud 42. Cet air est destiné à la sortie 52 alimentant les places arrière de l'habitacle du véhicule automobile.

On observera que, dans cette variante de réalisation, les aménagements de déflexion 100 concernent à la fois le flux d'air chaud 42 ayant traversé le conduit d'air chaud 18 et le flux d'air froid 38 ayant traversé le conduit d'air froid 16. Les deux déflecteurs montants 104 dévient le flux d'air chaud 42 vers la partie haute de la chambre de mixage 44, tandis que les deux déflecteurs descendants 106 dévient le flux d'air chaud 42 vers la partie basse de la chambre de mixage 44 sont aménagés entre les deux déflecteurs 104. De plus ces déflecteurs 104 et 106 définissent trois canaux : un canal central 107 entre les déflecteurs 106 et deux canaux latéraux 107 compris chacun entre un déflecteur 104 et un déflecteur 106. Ces trois canaux 107 constituent des déflecteurs montants qui permettent de dévier une partie du flux d'air froid 38 vers la partie haute de la chambre de mixage.

Comme on l'a expliqué précédemment, l'appareil représenté sur les Figures 1 et 2 est de type mono-zone. C'est la raison pour laquelle la chambre de mixage 44 ne comporte aucune division intérieure. Les aménagements de déflexion 100 représentés sur la Figure 2 ne comportent donc aucune séparation tendant à diviser la chambre de mixage 44 en deux ou plusieurs parties. Par conséquent, la température de l'air mixé est la même pour toutes les zones de l'habitacle du véhicule dans lesquelles il est délivré.

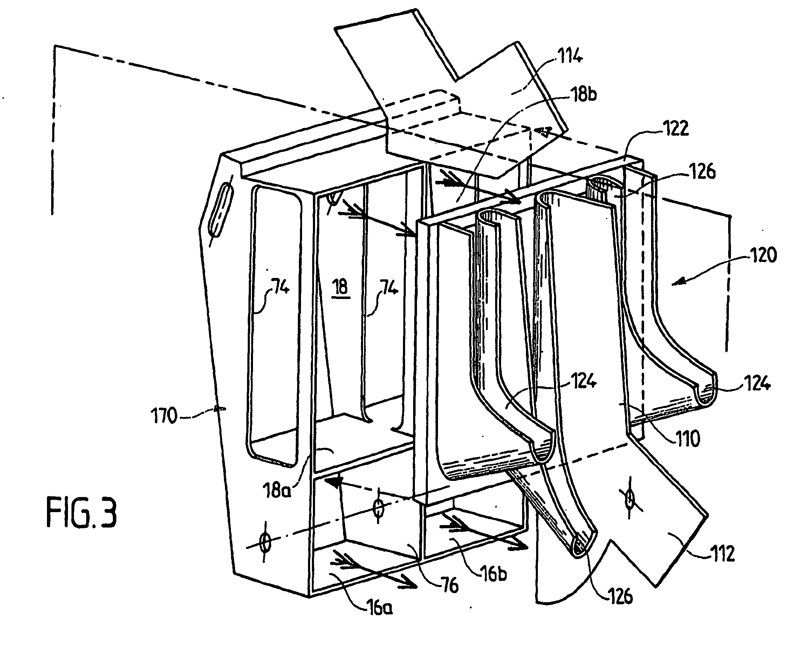

On a illustré schématiquement sur la Figure 3 un second mode de réalisation d'un dispositif modulaire conforme à la présente invention. Ce dispositif est destiné à un appareil de chauffage bi-zones. Comme le premier mode de réalisation, il comporte un cadre de support rectangulaire 170 dans les parois verticales duquel des ouvertures rectangulaires allongées 74 sont ménagées pour l'introduction du radiateur de chauffage. L'espace intérieur du cadre est divisé dans le sens de la hauteur en un tunnel d'air froid 16 situé à la partie inférieure du cadre et un tunnel d'air chaud 18 situé à la partie supérieure du cadre par une plaque de partition horizontale 72. Toutefois, contrairement au mode de réalisation décrit précédemment, le tunnel d'air froid 16 est à son tour divisé en deux conduits d'air froid, à savoir un conduit d'air froid gauche 16a et un conduit d'air froid droit 16b par une cloison verticale de zone 76 qui s'étend de la partie inférieure à la partie supérieure du cadre de support 170. De la même manière, le tunnel d'air chaud 18 est divisé, dans le sens horizontal, en un conduit d'air chaud gauche 18a et un conduit d'air froid 18b par la cloison de zone 76. On observera par ailleurs que la cloison de zone 76 est, en outre, traversée par une ouverture 74 identique aux ouvertures rectangulaires allongées 74 prévues dans les parois verticales du cadre de support 170. Le cadre de support 170 est ainsi divisé, dans le sens horizontal, en deux paires de conduits chaud et froid, à savoir les conduits 16a, 18a et 16b, 18b.

Chaque paire de conduits 16a, 18a, d'une part, 16b, 18b, d'autre part, possède des moyens de répartition pour répartir le flux d'air principal 10 (Figure 1) en proportions réglables en un flux d'air secondaire froid parcourant le conduit froid de la paire de conduits concernés, et un flux secondaire d'air à chauffer qui est introduit dans le conduit chaud 18a ou 18b de la paire de conduits concernés.

Dans l'exemple représenté sur la Figure 3, ces moyens de répartition (non représentés) sont identiques aux moyens de répartition du premier mode de réalisation représentés sur les Figures 1 et 2. Ils sont par conséquent constitués d'un volet d'air froid 22 monté pivotant autour d'un axe 24 et apte à obturer le conduit froid, et d'une plaque obturatrice 26 mobile entre une position d'ouverture et une position de fermeture. La différence entre les deux modes de réalisation réside dans le fait que, dans la variante bi-zones, chaque paire de conduits chaud et froid possède ses propres moyens de répartition. Il y a donc un volet d'air froid dans le conduit froid 16a et un autre volet d'air froid, indépendant du premier, dans le conduit d'air froid 16b. De la même manière, le conduit d'air chaud 18a peut être obturé par une plaque obturatrice 26, tandis que le conduit chaud 18b peut être obturé par une autre plaque obturatrice indépendante de la première.

On constate ainsi que la cloison verticale 76 délimite deux circuits indépendants et séparés dans lesquels circulent des flux d'air qui ne communiquent pas entre eux. Chacun de ces flux est destiné, après remélange, à alimenter une zone particulière de l'habitacle du véhicule automobile. Etant donné qu'il s'agit, dans ce cas, d'un appareil de chauffage et de climatisation bi-zones, le circuit de gauche (16a, 18a) est destiné à alimenter la partie gauche de l'habitacle du véhicule, par exemple, tandis que la partie droite du dispositif est destinée à alimenter la partie droite de l'habitacle du véhicule automobile. Bien entendu, il ne s'agit là que d'un exemple et il va de soi que l'appareil de chauffage et de climatisation pourrait être disposé dans une autre orientation spatiale. Ainsi, le cadre de support 70 ou 170, au lieu d'être vertical comme dans les exemples décrits, pourrait être placé en position horizontale. On pourrait imaginer également que la partie gauche du dispositif de répartition alimente la partie droite de l'habitacle et inversement.

De même que le volume intérieur du cadre de support 170 est divisé en deux circuits indépendants par la cloison de zone verticale 76, la chambre de mixage (Figure 1) est scindée en deux parties indépendantes, selon la direction gauche-droite du dispositif par une cloison centrale 110. La cloison centrale 110 possède un prolongement 112 qui pénètre dans la canalisation de sortie 52 destinée à amener l'air à la partie arrière de l'habitacle du véhicule automobile (Figure 1). En outre, la cloison de séparation centrale 110 est prolongée, à sa partie supérieure, par une cloison secondaire 114 en forme de V dont les branches pénètrent dans les conduites de sortie 46 et 48, respectivement.

Les aménagements de déflexion d'air, désignés par la référence générale 120, comprennent un cadre rectangulaire 122 dont le pourtour s'adapte exactement au pourtour du tunnel d'air chaud 18 du cadre 170. La cloison de séparation centrale 110 est fixée sur le cadre 122. Elle fait partie des aménagements de déflexion 120. A la gauche de la cloison centrale, selon la figure, on trouve un déflecteur d'air montant 124 et un déflecteur d'air descendant 126. De la même manière, à droite de la cloison 110, on trouve un déflecteur d'air descendant 126 et un déflecteur d'air montant 124. La fonction des déflecteurs montants 124 et descendants 126 est identique à celle des déflecteurs correspondants 104 et 106 décrits en référence à la Figure 2.

On constate ainsi que la cloison centrale de zone verticale 76, prolongée par la cloison centrale 110 et la cloison secondaire 114, délimite deux circuits de chauffage et de ventilation séparés, indépendants l'un de l'autre. La température de l'air, dans chacune des chambres de mixage indépendantes délimitées par la cloison centrale 110, peut être réglée de manière indépendante par les moyens de répartition indépendants dont sont pourvus chacun des conduits chauds et froids 16a, 18a et 16b, 18b. On peut ainsi imaginer que l'un des conduits soit en mode froid, tandis que l'autre soit en mode chaud. On peut ainsi régler séparément la température et la diffusion de l'air dans les parties gauche et droite de l'habitacle du véhicule automobile.

Il est important de souligner que le boîtier 4 de l'appareil de chauffage et de climatisation dans lequel le dispositif est installé est identique dans les deux modes de réalisation. En particulier, c'est la cloison centrale 110 qui délimite deux chambres de mixage indépendantes dans le volume intérieur du boîtier. Les aménagements intérieurs du boîtier ne diffèrent pas d'une version à l'autre. De la même manière, ce sont les aménagements intérieurs des cadres 70 et 170 qui délimitent un ou deux circuits de chauffage et de climatisation indépendants. Toutefois, la forme extérieure et les dimensions du cadre de support 70 et celles du cadre 170 sont identiques, de telle sorte que ces derniers peuvent se monter dans un type unique de boîtier.

Comme on l'a fait observer précédemment, le boîtier 4 est constitué de deux parties, une partie supérieure 4a et une partie inférieure 4b qui se raccordent selon un plan de joint 6. Cette construction en deux parties permet d'insérer facilement le dispositif de l'invention dans l'une des moitiés inférieure ou supérieure du boîtier, puis de refermer le boîtier en ajoutant la seconde partie.

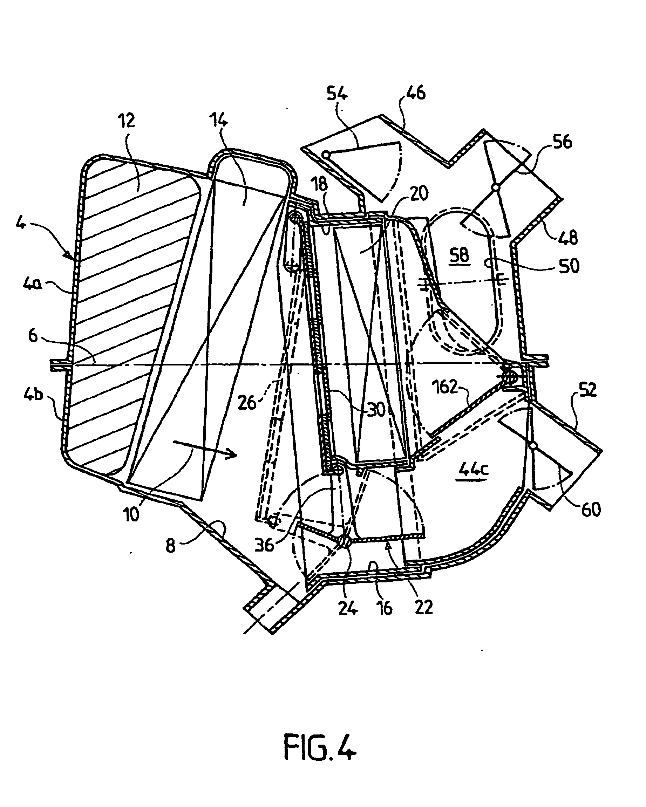

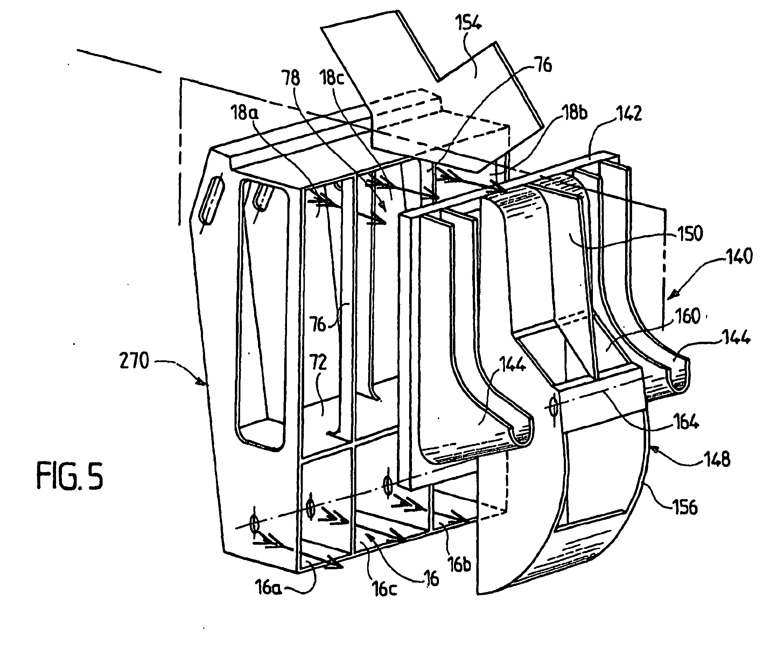

On a représenté sur les Figures 4 et 5 un appareil de chauffage et de climatisation tri-zones. Cet appareil comporte un boîtier 4 qui est exactement identique au boîtier des modes de réalisation précédents. L'arrivée d'air, l'évaporateur 14 et le radiateur de chauffage 20 sont également identiques dans les trois modes de réalisation. Les particularités de cette réalisation sont visibles plus particulièrement sur la Figure 5 qui représente, en perspective, le cadre de support 270 et les aménagements de déflexion d'air 140 correspondant à ce cadre de support.

Le cadre 270 est divisé, dans le sens de la hauteur, en un tunnel d'air froid 16 et un tunnel d'air chaud 18 par une plaque de partition 72 horizontale. En outre, les tunnels d'air froid 16 et chaud 18 sont eux-mêmes divisés en trois parties, dans le sens gauche-droite, en trois circuits indépendants par deux cloisons de zone verticale 76. Les deux cloisons de zone 76 divisent le tunnel d'air froid 16 en un conduit d'air froid gauche 16a, un conduit d'air froid droit 16b et un conduit d'air froid central 16c.

De la même manière, les cloisons de zone 76 divisent le tunnel d'air chaud 18 en un conduit d'air froid gauche 18a, un conduit d'air froid droit 18b et un conduit d'air froid central 18c. On définit ainsi trois paires de conduits, à savoir, respectivement, une paire de conduits froid et chaud gauches 16a, 18a, une paire de conduits froid et chaud droits 16b, 18b et une paire de conduits froid et chaud centraux 16c, 18c. Chacune de ces paires de conduits forme une partie d'un circuit de chauffage et de ventilation indépendant d'une zone du véhicule automobile.

Chaque paire de conduits comporte des moyens de répartition qui permettent de répartir en proportions variables le flux d'air principal 10 (Figure 1) entre les conduits froids et chauds de chacune des paires de conduits respectives. Dans l'exemple de réalisation représenté, les moyens de répartition de chaque paire de conduits sont constitués par un volet d'air froid 22 monté pivotant autour d'un axe 24 et apte à ouvrir ou fermer la section de passage du conduit froid 16a, 16b, 16c respectif dans lequel il est monté.

Les moyens de répartition de chacun des conduits chauds 18a, 18b, 18c sont constitués par une plaque obturatrice 26, chaque conduit chaud comportant une plaque indépendante de celle des autres conduits. On peut ainsi régler de manière indépendante la répartition de l'air entre le conduit chaud et le conduit froid dans chacune des trois paires de conduits. Les aménagements de déflexion d'air, désignés par la référence générale 140, comprennent un cadre rectangulaire 142 dont le pourtour s'adapte exactement au pourtour du tunnel d'air chaud 18.

Les aménagements de déflexion 140 comprennent, en outre, une cloison centrale de séparation 150 qui scinde le volume intérieur du boîtier dans lequel le dispositif est monté (Figure 4) en une chambre de mixage gauche et une chambre de mixage droite (non représentées). Comme dans le cadre du mode de réalisation précédent, la cloison de séparation centrale est prolongée à sa partie supérieure par une cloison auxiliaire 154 en forme de V dont les branches sont destinées à s'engager dans des conduites de sortie 46 et 48 de l'appareil de chauffage.

Les aménagements de déflexion comprennent, en outre, un déflecteur d'air montant gauche 144 situé dans la chambre de mixage gauche et un déflecteur d'air montant similaire 144 situé dans la chambre de mixage droite. Cette réalisation, contrairement aux précédentes, ne comporte pas de déflecteur d'air descendant. En effet, dans cette variante, le circuit d'air chaud et froid 18c, 16c central est spécialement destiné à l'alimentation en air à température réglée des places arrière du véhicule. Les aménagements de déflexion 140 comportent une boîte désignée par la référence générale 148 présentant une entrée de forme rectangulaire verticale et qui s'adapte exactement au circuit d'air chaud et froid central 18c, 16c. Le volume intérieur délimité par la boîte 148 constitue une chambre de mixage séparée 44c (Figure 4) spécifique au circuit d'air chaud et froid central.

Le flux d'air froid central circulant dans le conduit d'air froid central 16c, et le flux d'air chaud central circulant dans le conduit d'air chaud central 18c se mélangent dans cette chambre de mixage particulière. L'air à température intermédiaire qui résulte de ce mélange est dirigé vers les places arrière du véhicule par la conduite de sortie 52. A cet effet, la boîte 148 comporte une ouverture 156 située en regard de la sortie d'air 52. Ainsi, l'air peut s'échapper de la boîte 148 et pénétrer dans la sortie 52. Dans une réalisation préférée, la boîte 148 peut comporter une sortie d'air 160 située à la partie supérieure de la boîte.

Un volet en drapeau 162 pivotant autour d'un axe 164 permet d'ouvrir soit la sortie 156, soit la sortie 160. Ainsi, pendant le fonctionnement normal de l'appareil, le volet 162 ferme la sortie supérieure 160, de telle sorte que la sortie inférieure 146 est ouverte et l'air dirigé vers les places arrière du véhicule automobile. Au contraire, en mode dégivrage, le volet 162 se trouve dans la position représentée en traits pleins sur la Figure 4. En d'autres termes, l'air chaud qui provient du conduit d'air chaud central 18c est dirigé en totalité vers la partie supérieure de la chambre de mixage 44c et s'échappe par la sortie supérieure 160. Dans ce mode de fonctionnement, la totalité de l'air chaud disponible est utilisée pour dégivrer le pare-brise et le mode de chauffage des places arrière n'est pas disponible.

Bien que, dans les modes de réalisation décrits, l'appareil de chauffage comporte un radiateur de chauffage unique 20 qui est utilisé pour réchauffer l'air de l'ensemble des circuits d'air chaud, qu'il y ait un, deux ou trois circuits chauds, il est possible d'implanter plusieurs échangeurs thermiques entre le ou les dispositifs de répartition des flux d'air et les aménagements de déflexion d'air. On peut ainsi prévoir un radiateur de chauffage et une résistance à coefficient de température positif (CTP).

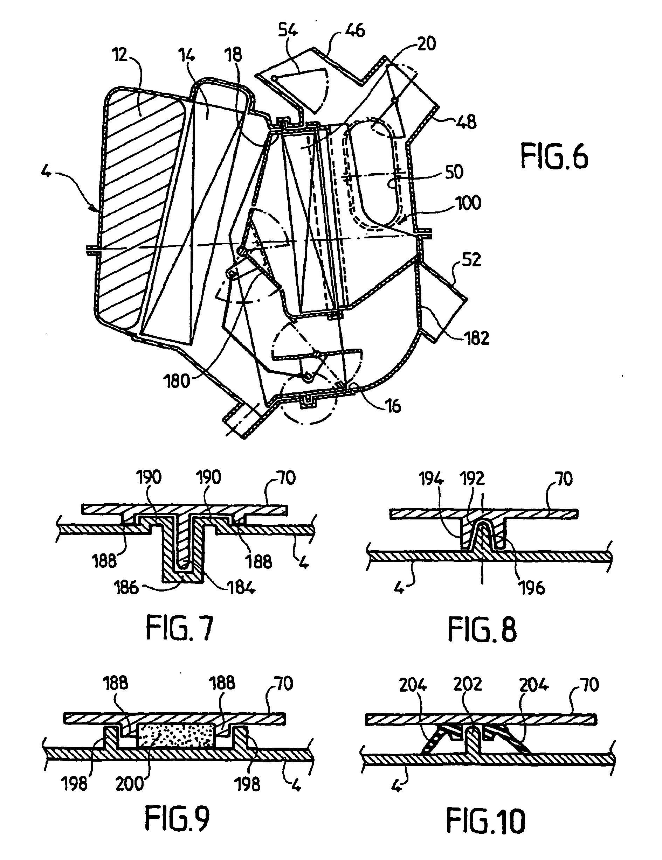

De la même manière, il est possible d'utiliser des moyens de répartition différents de ceux qui ont été décrits. Au lieu d'un volet d'air froid pivotant et d'une plaque obturatrice, il est possible d'utiliser deux volets pivotants, à savoir un volet pivotant 20 destiné à réguler le passage de l'air dans le conduit froid 16, et un volet pivotant 180 (voir Figure 6) destiné à réguler la circulation de l'air dans le conduit chaud 18. Un dispositif de répartition de ce type, dont le prix de revient est moins élevé, est destiné à un appareil de chauffage mono-zone convenant à l'équipement d'un véhicule d'entrée de gamme. On remarquera, en particulier, que les aménagements de déflexion 100 comportent un flasque 182 qui obture la conduite de sortie 52 du boîtier, destiné en principe à amener l'air aux places arrière du véhicule.

Dans cette réalisation simplifiée, il n'y a que trois sorties d'air, et non quatre comme dans les modes de réalisation décrits précédemment. Ces trois sorties correspondent, respectivement, à la sortie 46 de dégivrage/désembuage du pare-brise, à la sortie 48 d'aérateurs de planche de bord et à la sortie 50 de chauffe-pieds. Ainsi, on constate que la forme du boîtier et ses aménagements intérieurs sont identiques quelle que soit la version de l'appareil de chauffage. La conduite de sortie d'air 52 destinée aux places arrière de l'habitacle existe dans tous les cas de figure, même si elle n'est pas utilisée effectivement dans les versions les plus simples.

Conformément à l'invention, des moyens sont prévus, d'une part pour monter aisément le dispositif de génération d'un flux d'air à température réglée de l'invention dans un boîtier tel que le boîtier 4 de l'appareil de chauffage et de climatisation, et d'autre part pour assurer une liaison étanche entre le pourtour extérieur du cadre 70, 170 ou 270 selon les versions, et la paroi interne du boîtier 4 de l'appareil de chauffage 2.

Sur la Figure 7, ces moyens de raccordement sont constitués par une nervure périphérique 184 formée sur la face externe du cadre 70. Cette nervure s'engage, lorsque le dispositif est monté dans le boîtier, dans une rainure 186 dont la forme correspond à celle de la nervure 184. En outre, le cadre 70 comporte deux collerettes parallèles 188 qui retiennent tangentiellement le cadre 70 sur deux épaulements 190 formés dans la paroi 4 du boîtier.

Sur la Figure 8, une gorge périphérique 192 est formée dans une nervure circulaire 194 prévue à la périphérie du cadre 70. Un cordon d'emboîtement 196 formé sur une paroi périphérique interne du cadre 4 s'engage dans la gorge 192. L'emboîtement de ces deux parties permet d'assurer à la fois le maintien du dispositif dans le boîtier et l'étanchéité entre eux.

Sur la Figure 9, le cadre 70 comporte deux collerettes espacées 188 qui s'engagent entre deux collerettes 198 plus espacées, formées sur une paroi périphérique interne du boîtier 4. Un joint de mousse 200 interposé entre la paroi extérieure du cadre 70 et la paroi intérieure du boîtier 4 assure une liaison étanche.

Sur la Figure 10, une nervure périphérique 202 est formée sur une paroi périphérique intérieure du cadre 4. Les deux joints 204 à lèvres surmoulées sont formés sur une paroi périphérique extérieure du cadre 70, de part et d'autre de la nervure 202. Les lèvres des joints 204 assurent l'étanchéité entre le cadre et le boîtier, tandis que l'engagement de la nervure 202 entre les deux joints assure le maintien du dispositif de génération d'un flux d'air à température réglée.

## Revendications

1. Appareil de chauffage et/ou de climatisation de l'habitacle d'un véhicule, comprenant
• un boîtier (4)
• un dispositif de génération d'un flux d'air à température réglée, pour alimenter en air à température réglée une ou plusieurs zones de l'habitacle d'un véhicule automobile, comprenant :
∘ des moyens de répartition (22, 26) d'un flux d'air principal (10) pour répartir en proportions réglables ce flux d'air (10) en un flux d'air secondaire froid (38) et un flux d'air secondaire à chauffer (40),
∘ des moyens de chauffage (20) pour chauffer le flux d'air secondaire à chauffer (40) afin de produire un flux d'air secondaire chaud (42),
le dispositif de génération d'un flux d'air à température réglée comportant un ensemble modulaire rapporté dans le boîtier (4) de l'appareil de chauffage et/ou de climatisation (2) de l'habitacle du véhicule, et existant en deux versions au moins, adaptées à la production d'un flux d'air à température réglée pour alimenter en air à température réglée au moins une zone ou deux zones de l'habitacle, l'encombrement extérieur de l'ensemble modulaire étant identique quel que soit le nombre de zones de l'habitacle auquel il est destiné,
le dispositif de génération d'un flux d'air à température réglée comprenant un cadre de support (70, 170, 270) scindé en deux parties par une plaque de partition (72) qui divise le cadre de support (70, 170, 270) en un tunnel d'air chaud (18) et un tunnel d'air froid (16).

2. Appareil de chauffage et/ou de climatisation selon la revendication 1, **caractérisé en ce que** la plaque de partition (72) est rapportée ou intégrée dans le cadre de support, le cadre de support (70, 170, 270) pouvant, selon la version de l'appareil (2) auquel il est destiné, ne comporter aucune division des tunnels d'air chaud et froid (18, 16) ou être divisé par au moins une cloison de zone (76) en au moins deux paires de conduits (16a, 18a), (16b, 18b), (16c, 18c), chaque paire de conduits étant constituée par un conduit d'air chaud et par un conduit d'air froid, et comportant des moyens de répartition (22, 26) indépendants pour répartir une partie du flux d'air principal (10) en proportions réglables entre son conduit d'air chaud et son conduit d'air froid.

3. Appareil de chauffage et/ou de climatisation selon l'une des revendications 1 et 2, **caractérisé en ce qu'**il comporte des aménagements de mise au point aérothermique (100, 120, 140) pour orienter au moins le flux d'air secondaire chaud vers des régions préférées d'un volume interne (44) du boîtier (4) de l'appareil de chauffage et/ou de climatisation (2).

4. Appareil de chauffage et/ou de climatisation selon la revendication 3, **caractérisé en ce que** les aménagements de mise au point aérothermique comprennent des aménagements de déflexion d'air (100, 120, 140).

5. Appareil de chauffage et/ou de climatisation selon la revendication 3, **caractérisé en ce que** les aménagements de mise au point aérothermique comprennent au moins une nervure de guidage ou de mélange d'air.

6. Appareil de chauffage et/ou de climatisation selon la revendication 3, **caractérisé en ce que** les aménagements de déflexion (100) comprennent au moins un déflecteur montant (104) pour orienter une partie du flux d'air chaud vers la partie supérieure du volume interne du boîtier, au moins un déflecteur descendant (106) pour orienter une partie du flux d'air chaud vers la partie inférieure du volume interne (44) du boîtier (4), et au moins un déflecteur montant pour orienter au moins une partie du flux d'air froid vers la partie supérieure du même volume interne (44) du boîtier (4).

7. Appareil de chauffage et/ou de climatisation selon l'une des revendications 2 à 6, destiné à un appareil de chauffage (2) bi-zones, **caractérisé en ce qu'**il comporte une cloison de zone centrale (76) divisant le tunnel d'air chaud (18) en un conduit d'air chaud gauche (18a) et un conduit d'air chaud droit (18b) et le tunnel d'air froid (16) en un conduit d'air froid gauche (16a) et un conduit d'air froid droit (16b), et des aménagements de déflexion (120) comportant une cloison centrale (110) prévue pour diviser le volume interne du boîtier (44) en une chambre de mixage gauche et une chambre de mixage droit, au moins un déflecteur d'air montant (124) et au moins un déflecteur d'air descendant (126) dans la chambre de mixage gauche, au moins un déflecteur d'air montant (124) et au moins un déflecteur d'air descendant (126) dans la chambre de mixage droite, et au moins un déflecteur montant dans le tunnel d'air froid (16).

8. Appareil de chauffage et/ou de climatisation selon l'une des revendications 2 à 6, destiné à un appareil de chauffage tri-zones, **caractérisé en ce qu'**il comporte deux cloisons de zone (76) divisant le tunnel d'air chaud (18) en trois conduits d'air chaud (18a, 18b, 18c) et le tunnel d'air froid (16) en trois conduits d'air froid (16a, 16b, 16c), et des aménagements de déflexion d'air (140) comportant une cloison centrale (150) prévue pour diviser le volume interne (44) du boîtier (4) en une chambre de mixage gauche et une chambre de mixage droit après montage du dispositif dans un appareil de climatisation, au moins un déflecteur (144) dans la chambre de mixage gauche et au moins un déflecteur (144) dans la chambre de mixage droite, et **en ce qu'**il comporte une boîte (148) délimitant un volume de mixage qui s'adapte sur l'une des paires de conduits d'air chaud et froid (18c, 16c) du cadre de support (270), la boîte (148) comportant une première sortie d'air (156) destinée, après montage du dispositif dans un appareil de chauffage et/ou de climatisation (2), à être placée en regard d'une sortie d'air (52) du boîtier de l'appareil de chauffage et/ou de climatisation (2) pour amener de l'air aux places arrière du véhicule.

9. Appareil de chauffage et/ou de climatisation selon la revendication 8, **caractérisé en ce que** la boîte de sortie (148) comporte une seconde sortie d'air (160) qui s'ouvre vers le volume interne (44) du boîtier (4), un volet orientable (162) permettant d'obturer la première ou la seconde sortie d'air.

10. Appareil de chauffage et/ou de climatisation selon l'une des revendications 2 à 9, **caractérisé en ce que** le cadre de support (70, 170, 270) comporte des moyens de raccordement au boîtier (4) de l'appareil de chauffage et/ou de climatisation, permettant de solidariser le module au boîtier (4) avec étanchéité à l'air.

11. Appareil de chauffage et/ou de climatisation selon la revendication 10, **caractérisé en ce que** les moyens de raccordement sont constitués par une nervure périphérique (184) formée sur le cadre de support (70, 170, 270), et prévue pour s'engager dans une rainure correspondante (186) du boîtier (4) de l'appareil de chauffage et/ou de climatisation (2), ou inversement.

12. Appareil de chauffage et/ou de climatisation selon la revendication 10, **caractérisé en ce que** les moyens de raccordement sont constitués par une gorge périphérique (192) formée sur le cadre de support (70, 170, 270) et prévue pour recevoir un cordon d'emboîtement (196) correspondant, formé dans une paroi interne du boîtier (4) de l'appareil de chauffage et/ou de climatisation (2), ou inversement.

13. Appareil de chauffage et/ou de climatisation selon la revendication 10, **caractérisé en ce que** les moyens de raccordement sont constitués par deux collerettes espacées (188) formées sur une paroi périphérique extérieure du cadre de support (70, 170, 270) et s'engageant entre deux collerettes plus espacées (198) formées sur une paroi périphérique intérieure du boîtier (4) de l'appareil de chauffage et/ou de climatisation (2), avec possibilité d'insérer un joint.

14. Appareil de chauffage et/ou de climatisation selon la revendication 10, **caractérisé en ce que** les moyens de raccordement sont constitués par deux joints à lèvres surmoulées (204) formés sur une paroi périphérique extérieure du cadre de support (70, 170, 270), les joints (204) retenant entre eux une nervure (202) formée sur une paroi périphérique interne du boîtier (4) de l'appareil de chauffage et/ou de climatisation (2).

15. Appareil de chauffage et/ou de climatisation selon l'une des revendications 1 à 14, **caractérisé en ce que** les moyens de répartition sont constitués par au moins un panneau (30) comportant une pluralité d'ajours (34), et une plaque obturatrice (26) comportant une pluralité d'ouvertures (32), la plaque obturatrice étant mobile entre une position d'ouverture dans laquelle elle ne recouvre pas les ajours (34) du panneau (30) et une position d'obturation dans laquelle elle obture les ajours (34) du panneau (30), au moins un volet de réglage (22) de la section de passage du conduit d'air froid (16) mobile entre une position d'ouverture et une position d'obturation, et un mécanisme de commande (36) pour commander de manière synchronisée le déplacement de la plaque obturatrice (26) et le déplacement du volet de réglage (22) de la section de passage du conduit d'air froid entre leur position d'ouverture et leur position d'obturation.

16. Appareil de chauffage et/ou de climatisation selon l'une des revendications 1 à 14, **caractérisé en ce que** les moyens de répartition sont constitués par au moins un volet rotatif (22) disposé dans le conduit d'air froid (16a, 16b, 16c), et au moins un volet rotatif (180) disposé dans le conduit d'air chaud (18a, 18b, 18c).

## Patentansprüche

1. Heizungs- und/oder Klimagerät für einen Fahrgastraum eines Kraftfahrzeuges, umfassend
• ein Gehäuse (4)
• eine Vorrichtung zur Erzeugung eines Luftstroms mit regulierter Temperatur, um einem oder mehreren Bereichen eines Fahrgastraumes eines Kraftfahrzeuges Luft mit regulierter Temperatur zuzuführen, umfassend:
∘ Verteilungsmittel (22, 26) eines Hauptluftstroms (10), um diesen Luftstrom (10) zu regulierbaren Anteilen in einen kalten Sekundärluftstrom (38) und einen zu wärmenden Sekundärluftstrom (40) aufzuteilen,
∘ Heizungsmittel (20), um den zu wärmenden Sekundärluftstrom (40) aufzuheizen, damit ein warmer Sekundärluftstrom (42) erzeugt wird,
wobei die Vorrichtung zur Erzeugung eines Luftstroms mit regulierter Temperatur einen modularen Zusammenbau umfasst, der in das Gehäuse (4) des Heizungs- und/oder Klimageräts (2) des Fahrgastraumes des Kraftfahrzeuges eingesetzt ist und zumindest in zwei Ausführungen existiert, die für die Erzeugung eines Luftstroms mit regulierter Temperatur zum Versorgen mindestens eines oder zweier Bereiche des Fahrgastraumes mit Luft mit regulierter Temperatur ausgelegt sind, wobei die äußeren Abmessungen des modularen Zusammenbaus identisch sind, unabhängig von der Anzahl der Fahrgastraumbereiche, für die er bestimmt ist, wobei die Vorrichtung zur Erzeugung eines Luftstroms mit regulierter Temperatur einen Halterrahmen (70, 170, 270) umfasst, der durch eine Trennplatte (72), die den Halterrahmen (70, 170, 270) in einen Warmlufttunnel (18) und einen Kaltlufttunnel (16) unterteilt, in zwei Teile getrennt wird.

2. Heizungs- und/oder Klimagerät nach Anspruch 1, **dadurch gekennzeichnet, dass** die Trennplatte (72) in den Halterrahmen eingesetzt oder integriert ist, wobei der Halterrahmen (70, 170, 270), je nach Ausführung des Geräts (2), für das er bestimmt ist, keine Unterteilung in Warm- und Kaltlufttunnel (18, 16) umfassen oder von zumindest einer Bereichstrennwand (76) in zumindest zwei Leitungspaare (16a, 18a), (16b, 18b), (16c, 18c) unterteilt sein kann, wobei jedes Leitungspaar aus einer Warmluftleitung und einer Kaltluftleitung besteht, und wobei er unabhängige Verteilungsmittel (22, 26) umfasst, um einen Teil des Hauptluftstroms (10) zu regulierbaren Anteilen zwischen seiner Warmluftleitung und seiner Kaltluftleitung zu verteilen.

3. Heizungs- und/oder Klimagerät nach einem der Ansprüche 1 und 2, **dadurch gekennzeichnet, dass** es Anordnungen zur aerothermischen Ausrichtung (100, 120, 140) umfasst, um zumindest den warmen Sekundärluftstrom in Richtung bevorzugter Regionen eines inneren Raumes (44) des Gehäuses (4) des Heizungs- und/oder Klimageräts (2) auszurichten.

4. Heizungs- und/oder Klimagerät nach Anspruch 3, **dadurch gekennzeichnet, dass** die Anordnungen zur aerothermischen Ausrichtung Anordnungen zur Luftablenkung (100, 120, 140) umfassen.

5. Heizungs- und/oder Klimagerät nach Anspruch 3, **dadurch gekennzeichnet, dass** die Anordnungen zur aerothermischen Ausrichtung zumindest einen Luftführungs- oder Luftmischsteg umfassen.

6. Heizungs- und/oder Klimagerät nach Anspruch 3, **dadurch gekennzeichnet, dass** die Ablenkungsanordnungen (100) zumindest eine ansteigende Leitschaufel (104) zum Ausrichten eines Teils des Warmluftstroms in Richtung des oberen Bereichs des inneren Raumes des Gehäuses, zumindest eine absteigende Leitschaufel (106) zum Ausrichten eines Teils des Warmluftstroms in Richtung des unteren Bereichs des inneren Raumes (44) des Gehäuses (4) und zumindest eine ansteigende Leitschaufel zum Ausrichten zumindest eines Teils des Kaltluftstroms in Richtung des oberen Bereichs desselben inneren Raumes (44) des Gehäuses (4) umfassen.

7. Heizungs- und/oder Klimagerät nach einem der Ansprüche 2 bis 6, bestimmt für ein Zwei-Zonen-Heizungsgerät (2), **dadurch gekennzeichnet, dass** es eine zentrale Bereichstrennwand (76), die den Warmlufttunnel (18) in eine linke Warmluftleitung (18a) und eine rechte Warmluftleitung (18b) und den Kaltlufttunnel (16) in eine linke Kaltluftleitung (16a) und eine rechte Kaltluftleitung (16b) unterteilt, sowie Ablenkungsanordnungen (120) umfasst, umfassend eine zentrale Trennwand (110), die vorgesehen ist, um den inneren Raum des Gehäuses (44) in eine linke Mischkammer und eine rechte Mischkammer zu unterteilen, zumindest eine ansteigende Luftleitschaufel (124) und zumindest eine absteigende Luftleitschaufel (126) in der linken Mischkammer, zumindest eine ansteigende Luftleitschaufel (124) und zumindest eine absteigende Luftleitschaufel (126) in der rechten Mischkammer, und zumindest eine ansteigende Leitschaufel im Kaltlufttunnel (16).

8. Heizungs- und/oder Klimagerät nach einem der Ansprüche 2 bis 6, bestimmt für ein Drei-Zonen-Heizungsgerät, **dadurch gekennzeichnet, dass** es zwei Bereichstrennwände (76), die den Warmlufttunnel (18) in drei Warmluftleitungen (18a, 18b, 18c) und den Kaltlufttunnel (16) in drei Kaltluftleitungen (16a, 16b, 16c) unterteilen, sowie Anordnungen zur Luftablenkung (140) aufweist, umfassend eine zentrale Trennwand (150), die vorgesehen ist, um den inneren Raum (44) des Gehäuses (4) nach Einbau der Vorrichtung in ein Klimagerät in eine linke Mischkammer und eine rechte Mischkammer zu unterteilen, zumindest eine Leitschaufel (144) in der linken Mischkammer und zumindest eine Leitschaufel (144) in der rechten Mischkammer, und dadurch, dass sie einen Kasten (148) umfasst, der einen Mischraum begrenzt, der auf eines der Warm- und Kaltluftleitungspaare (18c, 16c) des Halterrahmens (270) passt, wobei der Kasten (148) einen ersten Luftaustritt (156) aufweist, der dazu bestimmt ist, nach Einbau der Vorrichtung in ein Heizungs- und/oder Klimagerät (2), gegenüber einem Luftaustritt (52) des Gehäuses des Heizungs- und/oder Klimageräts (2) angeordnet zu werden, um den hinteren Plätzen des Fahrzeuges Luft zuzuführen.

9. Heizungs- und/oder Klimagerät nach Anspruch 8, **dadurch gekennzeichnet, dass** der Austrittskasten (148) einen zweiten Luftaustritt (160) aufweist, der sich in Richtung des inneren Raumes (44) des Gehäuses (4) hin öffnet, wobei eine verstellbare Klappe (162) das Verschließen des ersten oder des zweiten Luftaustritts ermöglicht.

10. Heizungs- und/oder Klimagerät nach einem der Ansprüche 2 bis 9, **dadurch gekennzeichnet, dass** der Halterrahmen (70, 170, 270) Mittel zum Anschluss an das Gehäuse (4) des Heizungs- und/oder Klimageräts umfasst, die es ermöglichen, das Modul mit dem Gehäuse (4) luftdicht zu verbinden.

11. Heizungs- und/oder Klimagerät nach Anspruch 10, **dadurch gekennzeichnet, dass** die Anschlussmittel von einem peripheren Steg (184) gebildet werden, der auf dem Halterrahmen (70, 170, 270) ausgebildet und vorgesehen ist, um in eine entsprechende Rille (186) des Gehäuses (4) des Heizungs- und/oder Klimageräts (2) eingefügt zu werden oder umgekehrt.

12. Heizungs- und/oder Klimagerät nach Anspruch 10, **dadurch gekennzeichnet, dass** die Anschlussmittel von einer peripheren Nut (192) gebildet werden, die auf dem Halterrahmen (70, 170, 270) ausgebildet und vorgesehen ist, um ein entsprechendes Einfügeband (196), das auf einer inneren Wand des Gehäuses (4) des Heizungs- und/oder Klimageräts (2) ausgebildet ist, aufzunehmen oder umgekehrt.

13. Heizungs- und/oder Klimagerät nach Anspruch 10, **dadurch gekennzeichnet, dass** die Anschlussmittel von zwei beabstandeten Kragen (188) gebildet werden, die auf einer peripheren Außenwand des Halterrahmens (70, 170, 270) ausgebildet sind und sich in zwei noch größer beabstandete Kragen (198) einfügen, die auf einer peripheren Innenwand des Gehäuses (4) des Heizungs- und/oder Klimageräts (2) ausgebildet sind, wobei das Einfügen einer Dichtung möglich ist.

14. Heizungs- und/oder Klimagerät nach Anspruch 10, **dadurch gekennzeichnet, dass** die Anschlussmittel von zwei eingespritzten Lippendichtungen (204) gebildet werden, die auf einer peripheren Außenwand des Halterrahmens (70, 170, 270) ausgebildet sind, wobei zwischen den Dichtungen (204) ein Steg (202) festgehalten wird, der auf einer peripheren Innenwand des Gehäuses (4) des Heizungs- und/oder Klimageräts (2) ausgebildet ist.

15. Heizungs- und/oder Klimagerät nach einem der Ansprüche 1 bis 14, **dadurch gekennzeichnet, dass** die Verteilungsmittel von zumindest einer Platte (30) gebildet werden, die mehrere Durchbrüche (34) aufweist, und einer Verschlussplatte (26), die mehrere Öffnungen (32) aufweist, wobei die Verschlussplatte zwischen einer Öffnungsposition, in der sie die Durchbrüche (34) der Platte (30) nicht bedeckt, und einer Verschlussposition, in der sie die Durchbrüche (34) der Platte (30) verschließt, beweglich ist, und zumindest einer Klappe zur Regulierung (22) des Durchlaufabschnittes der Kaltluftleitung (16), die zwischen einer Öffnungsposition und einer Verschlussposition beweglich ist, und einem Steuermechanismus (36) zum synchronisierten Steuern der Bewegung der Verschlussplatte (26) und der Bewegung der Klappe zur Regulierung (22) des Durchlaufabschnittes der Kaltluftleitung zwischen deren Öffnungsposition und deren Verschlussposition.

16. Heizungs- und/oder Klimagerät nach einem der Ansprüche 1 bis 14, **dadurch gekennzeichnet, dass** die Verteilungsmittel von mindestens einer Drehklappe (22), die in der Kaltluftleitung (16a, 16b, 16c) angeordnet ist, und mindestens einer Drehklappe (180), die in der Warmluftleitung (18a, 18b, 18c) angeordnet ist, gebildet werden.

## Claims

1. Apparatus for heating and/or air-conditioning the cabin of a vehicle, comprising
• a casing (4):
• device for generating an air stream at a set temperature for supplying air at a set temperature to one or more regions of the cabin of a motor vehicle, comprising:
∘ means (22, 26) for distributing a main air stream (10) to split this air stream (10) in adjustable proportions into a cold secondary air stream (38) and a secondary air stream for heating (40),
∘ heating means (20) for heating the secondary air stream for heating (40) so as to produce a hot secondary air stream (42),
the device for generating an air stream at a set temperature comprising a modular assembly attached into the casing (4) of the apparatus (2) for heating and/or air-conditioning the cabin of the motor vehicle, and which exists in at least two versions, suited to the production of an air stream at a set temperature for supplying air at a set temperature to at least one region or two regions of the cabin, the external bulk of the modular assembly being identical regardless of the number of regions of the cabin for which it is intended,
the device for generating an air stream at a set temperature comprising a support frame (70, 170, 270) split into two parts by a partition plate (72) which divides the support frame (70, 170, 270) into a hot air tunnel (18) and a cold air tunnel (16).

2. Heating and/or air-conditioning apparatus according to Claim 1, **characterized in that** the partition plate (72) is attached or incorporated into the support frame, the support frame (70, 170, 270) being able, depending on the version of the apparatus (2) for which it is intended, to have no division of the hot and cold air tunnels (18, 16) or to be divided by at least one region partition (76) into at least two pairs of ducts (16a, 18a), (16b, 18b), (16c, 18c) each pair of ducts consisting of a hot air duct and of a cold air duct and comprising independent distribution means (22, 26) for splitting part of the main air stream (10) in adjustable proportions between its hot air duct and its cold air duct.

3. Heating and/or air-conditioning apparatus according to either of Claims 1 and 2, **characterized in that** it comprises aerothermal optimization arrangements (100, 120, 140) to orientate at least the hot secondary air stream toward preferred areas of an internal volume (44) of the casing (4) of the heating and/or air-conditioning apparatus (2).

4. Heating and/or air-conditioning apparatus according to Claim 3, **characterized in that** the aerothermal optimization arrangements comprise arrangements (100, 120, 140) for deflecting air.

5. Heating and/or air-conditioning apparatus according to Claim 3, **characterized in that** the aerothermal optimization arrangements comprise at least one rib for guiding or mixing air.

6. Heating and/or air-conditioning apparatus according to Claim 3, **characterized in that** the deflection arrangements (100) comprise at least one upward deflector (104) to orientate part of the hot air stream toward the upper part of the internal volume of the casing, at least one downward deflector (106) to orientate part of the hot air stream toward the lower part of the internal volume (44) of the casing (4), and at least one upward deflector to orientate at least part of the cold air stream toward the upper part of the same internal volume (44) of the casing (4).

7. Heating and/or air-conditioning apparatus according to one of Claims 2 to 6, intended for a two-region heating apparatus (2), **characterized in that** it comprises a central region partition (76) dividing the hot air tunnel (18) into a left-hand hot air duct (18a) and a right-hand hot air duct (18b) and the cold air tunnel (16) into a left-hand cold air duct (16a) and a right-hand cold air duct (16b), and deflection arrangements (120) comprising a central partition (110) designed to divide the internal volume of the casing (44) into a left-hand mixing chamber and a right-hand mixing chamber, at least one upward air deflector (124) and at least one downward air deflector (126) in the left-hand mixing chamber, at least one upward air deflector (124) and at least one downward air deflector (126) in the right-hand mixing chamber, and at least one upward deflector in the cold air tunnel (16).

8. Heating and/or air-conditioning apparatus according to one of Claims 2 to 6, intended for a three-region heating apparatus, **characterized in that** it comprises two region partitions (76) dividing the hot air tunnel (18) into three hot air ducts (18a, 18b, 18c) and the cold air tunnel (16) into three cold air ducts (16a, 16b, 16c) and air deflection arrangements (140) comprising a central partition (150) designed to divide the internal volume (44) of the casing (4) into a left-hand mixing chamber and a right-hand mixing chamber after the device has been mounted in an air-conditioning apparatus, at least one deflector (144) in the left-hand mixing chamber and at least one deflector (144) in the right-hand mixing chamber, and **in that** it comprises a box (148) delimiting a mixing volume which fits onto one of the pairs of hot air and cold air ducts (18c, 16c) of the support frame (270), the box (148) having a first air outlet (156) intended, after the device has been mounted in a heating and/or air-conditioning apparatus (2), to be placed facing an air outlet (52) of the casing of the heating and/or air-conditioning apparatus (2) so as to convey air to the rear seats of the vehicle.

9. Heating and/or air-conditioning apparatus according to Claim 8, **characterized in that** the outlet box (148) comprises a second air outlet (160) which opens toward the internal volume (44) of the casing (4), an orientable shutter (162) allowing the first or second air outlet to be shut off.

10. Heating and/or air-conditioning apparatus according to one of Claims 2 to 9, **characterized in that** the support frame (70, 170, 270) comprises means of connection to the casing (4) of the heating and/or air-conditioning apparatus, allowing the module to be secured to the casing (4) such that it is airtight.

11. Heating and/or air-conditioning apparatus according to Claim 10, **characterized in that** the connecting means consist of a peripheral rib (184) formed on the support frame (70, 170, 270) and designed to engage in a corresponding slot (186) of the casing (4) of the heating and/or air-conditioning apparatus (2), or vice versa.

12. Heating and/or air-conditioning apparatus according to Claim 10, **characterized in that** the connecting means consist of a peripheral groove (192) formed on the support frame (70, 170, 270) and designed to accommodate a corresponding push-in bead (196) formed in an internal wall of the casing (4) of the heating and/or air-conditioning apparatus (2), or vice versa.

13. Heating and/or air-conditioning apparatus according to Claim 10, **characterized in that** the connecting means consist of two spaced-apart flanges (188) formed on an exterior peripheral wall of the support frame (70, 170, 270) and engaging between two more widely spaced flanges (198) formed on an interior peripheral wall of the casing (4) of the heating and/or air-conditioning apparatus (2), with the possibility of inserting a seal.

14. Heating and/or air-conditioning apparatus according to Claim 10, **characterized in that** the connecting means consist of two seals with overmoulded lips (204) formed on an exterior peripheral wall of the support frame (70, 170, 270), the seals (204) trapping between them a rib (202) formed on an internal peripheral wall of the casing (4) of the heating and/or air-conditioning apparatus (2).

15. Heating and/or air-conditioning apparatus according to one of Claims 1 to 14, **characterized in that** the distribution means consist of at least one panel (30) comprising a number of perforations (34), and a shutoff plate (26) comprising a number of apertures (32), the shutoff plate being able to move between an open position in which it does not cover the perforations (34) in the panel (30) and a shutoff position in which it shuts off the perforations (34) in the panel (30), at least one shutter (22) for adjusting the passage cross section of the cold air duct (16) able to move between an open position and a shutoff position, and a control mechanism (36) for controlling in synchronism the movement of the shutoff plate (26) and the movement of the shutter (22) for adjusting the passage cross section of the cold air duct between their open position and their shutoff position.

16. Heating and/or air-conditioning apparatus according to one of Claims 1 to 14, **characterized in that** the distribution means consist of at least one rotary shutter (22) arranged in the cold air duct (16a, 16b, 16c), and at least one rotary shutter (180) arranged in the hot air duct (18a, 18b, 18c).
